# EUROPEAN PATENT SPECIFICATION

(11) **EP 0 336 037 B1**
(45) Date of publication and mention of the grant of the patent: **22.02.1995**
(21) Application number: 88308837.9
(22) Date of filing: 23.09.1988
(51) Int. Cl.: G11B 21/08

(54) **Servo head control apparatus**
Servokopf-Regelungsgerät
Appareil de commande de tête servo

(30) Priority: 04.04.1988 US 177301
(43) Date of publication of application: 11.10.1989
(73) Proprietor: SEAGATE TECHNOLOGY INTERNATIONAL, Georgetown Grand Cayman Island (KY)
(72) Inventor: Genheimer, Stephen Reeves, Yukon Oklahoma 73099 (US)
(74) Representative: Kenyon, Sarah Elizabeth

(56) References cited:
- FR-A- 2 258 661
- US-A- 4 591 933
- US-A- 4 636 883
- IBM TECHNICAL DISCLOSURE BULLETIN. vol. 28, no. 7, December 1985, NEW YORK USpages 3123 - 3127; "SQUARE ROOT ALGORITHM/ADAPTIVE SEEK PROFILE"
- PATENT ABSTRACTS OF JAPAN vol. 11, no. 162 (P-579)(2609) 26 May 1987,& JP-A-61 294671 (FUJI) 25 December 1986,

## Description

This invention relates to servo head control apparatus, for example, for controlling a seek operation of magnetic heads in magnetic disk apparatus.

When a disk drive shifts its head from one track to another, i.e. enters a "seek" mode, it is desirable to shift the head as quickly as possible so as to minimise unproductive time. An actuator to achieve this has a design force capacity which is a limiting factor in the amount of acceleration and deceleration which may be applied to an arm assembly which carries the head.

In conventional disk drive servo head control apparatus, a velocity profile is developed which controls motion of an actuator. Such an apparatus is disclosed in US-A-4,636,883. Typically, acceleration occurs at the maximum capability of the disk drive while deceleration is governed by a worst case deceleration profile. This profile is developed to cover the worst case conditions of voltage, temperature, actuator torque capability, circuit errors and external shock and vibration. Each disk drive thus operates under the worst case seek profile regardless of its actual operation conditions or capability.

An example of controlling a servo head can be found in IBM Technical Disclosure Bulletin Vol 28 No. 7 Dec 85.

The present invention seeks to provide a servo head control apparatus which has an adaptive velocity profile which maximises the performance of disk drive apparatus for each seek to decrease access times.

According to one aspect of the present invention, there is provided a head servo control apparatus comprising:
means for driving a voice coil actuator located in a disk drive apparatus to position a head on a specific track of a disk;
track crossing detection means which in operation outputs a track pulse signal for each track on the disk that is passed by the head;
position determining means to determine the instantaneous actuator position based on said track pulse signals from said track crossing detecting means said head servo control being characterised by:
means for determining a first position (S1B) relative to the start position of the head movement, where, after application of a maximum acceleration, a predetermined maximum velocity is obtained under best case conditions;
means for storing, at manufacturing time, worst case deceleration profiles and worst cases time values (TAW) representing the time elapsed from moving said head from said start position to said first position (S1B) under worst case conditions;
means for measuring the actual time (TAA) elapsed during a movement from said start position to said first position (S1B);
means for calculating a performance factor (R) as a ratio between said actual time value (TAA) and a worst case time value (TAW);
means for computing, based on said performance factor (R) and a worst case deceleration starting position (S2W) obtained from said storage means, a second position (S2A) representing the starting point to be used for starting the subsequent deceleration;
means for modifying the deceleration velocity in dependence on a worst case deceleration velocity profile obtained from said storage means and said performance factor (R), when said second position (S2A) is reached in order to stop movement exactly at a final position (SF).

In one embodiment, said target velocity modifying means, in operation, alters said pre-set limit.

In another embodiment, said target velocity modifying means, in operation, alters said velocity profile to alter said target velocity signal when the target distance is smaller than said pre-set limit.

The velocity profile may be determined by said performance factor.

According to another aspect of the present invention, there is provided a method of moving a head from a first position adjacent a first track on a disk to a second position (SF) adjacent a second track on the disk, comprising accelerating said head to a predetermined maximum velocity, and characterised by measuring the time (TAA) required to accelerate said head to a predetermined position (S1B), the velocity of said head at said predetermined position (S1B) being less than or equal to said maximum velocity, obtaining, from a storage means, preloaded at manufacturing time, the time required to accelerate said head to said predetermined position under "worst case" acceleration conditions, calculating a performance factor (R) based on the ratio of the measured (TAA) and obtained (TAW) times, calculating a third position (S2W) for said head where deceleration of said head is expected to commence to halt movement of said head at said second position (S2W) under "worst case" deceleration conditions, determining a fourth position (S2A) of said head, between said third (S2W) and second (SF) positions, based on the third position (S2W) and said performance factor (R), and commencing deceleration of said head when said head reaches its fourth position (S2A).

One embodiment of the present invention has a velocity profile selected, based on the performance factor. Another embodiment of the present invention has the commencement of deceleration delayed from the normal worst case point commencement to a point determined by the performance factor. A further embodiment of the present invention has the velocity profile altered during deceleration in accordance with the performance factor.

Use of the present invention effectively eliminates worst case effects of temperature, voltage, and actuator torque capability under typical operating conditions.

The invention is illustrated, merely by way of example, in the accompanying drawings, in which:-
Figure 1 is a block diagram of a servo head control apparatus according to the present invention;
Figure 2 is a graph of a velocity profile showing velocity versus time during a typical seek operation;
Figure 3 is a velocity profile showing velocity versus position in a seek operation performed in the prior art;
Figure 4 is a flow chart of a conventional velocity control process;
Figure 5 is a flow chart showing adaptive velocity control of a servo head control apparatus according to the present invention; and
Figure 6 is a velocity profile showing velocity versus position in a seek operation performed by a servo head control apparatus according to the present invention.

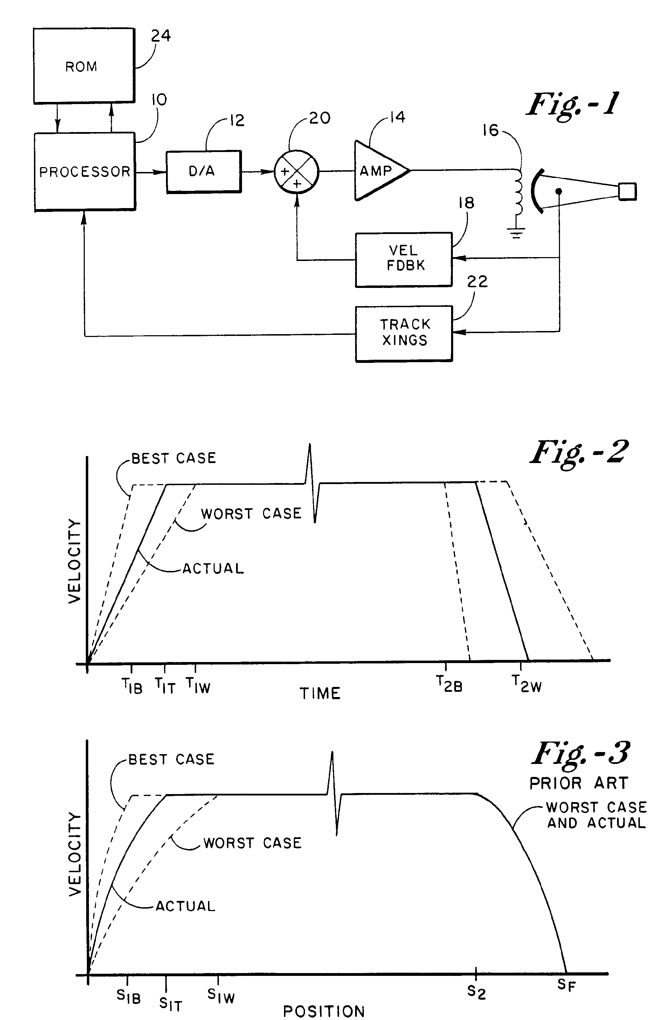

Figure 1 illustrates a servo head control apparatus. The purpose of the control apparatus is to move an actuator from one location (track) on a disk to another in a time optimal fashion. This is typically done under control of a micro-processor 10. The micro-processor 10 issues a velocity control signal through a digital-to-analog converter 12 to actuate a control circuit shown as an amplifier 14. A voice coil actuator 16 is driven by the amplifier 14 to move a head arm assembly from one track position to another. A velocity feedback loop 18 is summed with the output of the converter 12 in a summing node 20 to provide velocity feedback to the voice coil actuator 16 to control its velocity. As the voice coil actuator 16 crosses data tracks on a magnetic disk, a track crossing counter 22 provides count data to the micro-processer 10. A ROM (read only memory) 24 contains several look-up tables for use within the micro-processor 10.

Figures 2 and 3 illustrate a velocity profile experienced by the actuator while in its access or "seek" mode. Figure 2 represents velocity as a function of time, and Figure 3 represents velocity as a function of position or track. In an a typical access, the micro-processor 10 issues a full velocity command to start the motion of the head arm assembly, and the actuator accelerates with maximum (saturated) acceleration. When the maximum velocity is reached (position S₁), the actuator will continue moving at this velocity until it is time to decelerate (position S₂). Due to variations in environmental conditions and other factors, the actual time to reach maximum velocity, and the actual position of the actuator at that time, may vary between a best case (B) and a worst case (W) with a typical case (T) being in between. Thus, if conditions permit rapid acceleration to maximum velocity, the point of maximum velocity is reached earlier (T_{1B}, S_{1B}) than if conditions were at their worst (T_{1W}, S_{1W}). Due to the variation in time and position to reach maximum velocity, the time to reach the point of deceleration will correspondingly vary (T₂), but the position (S₂) where deceleration commences is dependent upon worst case conditions and the desired final track position.

At the commencement of deceleration at position S₂, the micro-processor controls the deceleration rate by means of the velocity profile. This profile is typically stored as a table in the ROM 24 and is designed such that the drive of the actuator under worst case conditions is capable of following the pre-determined velocity profile. The micro-processor 10 determines the instantaneous actuator positions by means of track crossing signals received from the track crossing counter 22. As a result, the micro-processor 10 can determine where the actuator is at any time, and which entry of the velocity profile (look-up table in the ROM 24) should be used. The micro-processor also determines the position S₂ at which deceleration should commence for worst case conditions.

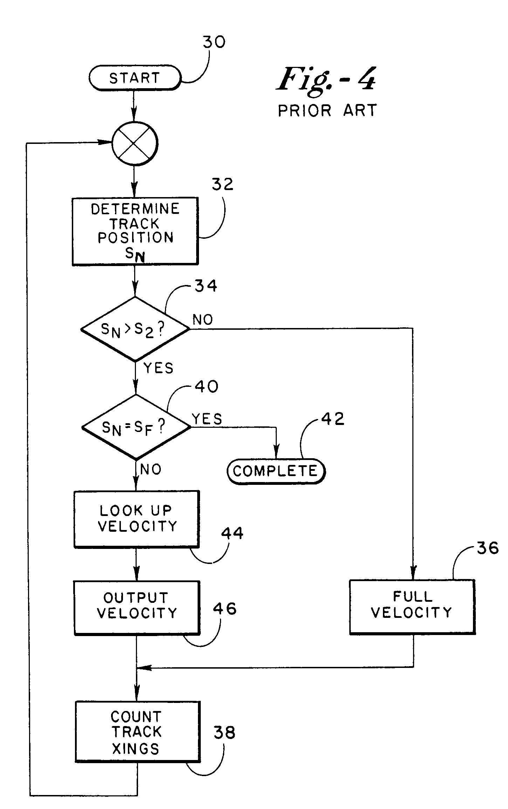

A simplified flow chart of the process is shown in Figure 4. The seek mode is started at step 30 and a determination of the track position S_{N} is made at step 32. Next, a conditional statement at step 34 is made that the instantaneous track position S_{N} is not greater than the saturation deceleration worst case position S₂, then full output velocity is maintained in step 36. The track crossing is detected in step 38 and fed back to the determination of track position at step 32. On the other hand, if the track position is within the region of saturation deceleration worst case, then a second conditional statement at step 40 which asks whether S_{N} is equal to the final track destination (S_{F}) is determined. If "yes", the operation is completed at step 42. If S_{N} is not equal to final track destination, a look-up velocity based on instantaneous position S_{N} is made at step 44. From the look-up table an output velocity is determined at step 46. This continues through the track crossings detection step 38 until the final track position is achieved.

As will be appreciated from Figure 2, the time at which full velocity is reached will depend on the conditions of the system. Hence, the time at which the deceleration worst case position S₂ is reached will vary between T_{2B} and T_{2W}. Prior systems commenced deceleration at position S₂ to care for worst case conditions, and deceleration was not always as rapid as possible because the actual deceleration profile followed the worst case deceleration profile, as shown in Figure 3. Thus, in prior systems, the deceleration velocity profile forced the actuator to follow a worst case condition, even if conditions did not warrant it. The present invention seeks to overcome this disadvantage by determining the approximate ratio of existing conditions, between best and worst cases, and adjusting the position S₂ at which deceleration is to commence and the velocity at which deceleration is to occur. Particularly, a performance ratio is determined, based on acceleration performance, to anticipate and adjust deceleration conditions to achieve track seeking in optimal time without over-shoot.

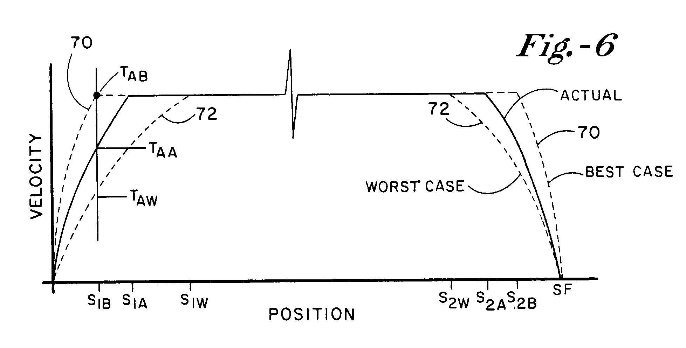

The present invention employs an adaptive velocity profile with the same servo head control apparatus shown in Figure 1, except for a new series of steps residing in firmware under control of the micro-processor 10. The access is started in the same manner as in prior servo head control apparatus with maximum acceleration. In addition, however, the micro-processor 10 measures the time required to accelerate by setting a timer at the beginning of the access and stopping it when the actuator reaches location S_{1B} (acceleration best case). S_{1B} is the track location at which a best case drive under best case conditions will reach its maximum velocity. Identification of location S_{1B} is calculated from the acceleration curve of the best case velocity profile (Figure 3) and from the identification of the present track from which the process is started. By comparing the actual time required to reach location S_{1B} (T_{AA} in Figure 6) to the time required to reach location S_{1B} under worst case condition (T_{AW}) a "performance ratio" R can be calculated. Calculation of the time (T_{AW}) to reach track position S_{1B} under worst case conditions is pre-loaded in the ROM 24 during manufacture and is determined by tests and calculations performed during the design of the disk drive apparatus. T_{AW} is determined from best and worst case measurements by determining the number of tracks crossed to reach maximum velocity under best case conditions and determining the time (T_{AW}) required to cross that number of tracks under worst case conditions. R, the performance ratio, is equal to T_{AW}/T_{AA} and is always equal to or greater than 1. This performance ratio is an indication of how much better the disk drike apparatus is performing than worst case and is used to modify the velocity profile during deceleration.

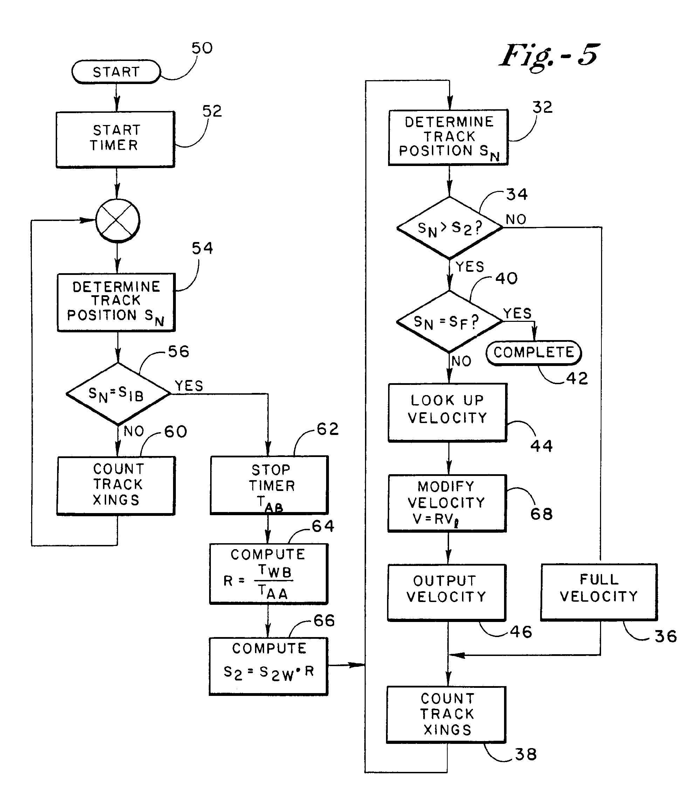

Figure 5 is a flow chart for a process according to the present invention. The process comprises all of the steps of the prior art process described above in connection with Figure 4, with additional modifications. Velocity during deceleration is controlled from the look-up table as in the conventional manner, but is modified by the performance ratio R before being issued to the actuator 16 (Figure 1). At a start step 50 of the seek mode, a timer is started at step 52 and a determination of the track position S_{N} at step 54 is made by a conditional statement at step 56 to determine if the head/actuator is still within its best case acceleration region. If S_{N} is less than S_{1B} (i.e. the position has not yet reached S_{1B}), the detection of tracks crossed at step 60 is continued. For each crossing detected, the track position S_{N} is incremented at step 54. When S_{N} reaches S_{1B}, the timer at step 62 is stopped and a computation of the performance ratio R is made at step 64. The performance ratio is determined from the relationship$\text{R =} \frac{{\text{T}}_{\text{AW}}}{{\text{T}}_{\text{AA}}} \text{,}$
where T_{AW} is the worst case time pre-loaded in the ROM and T_{AA} is the actual time measured by the timer.

A new S₂ is determined at step 66 from the relationship S₂ = S_{2W} . R, where S_{2W} is the worst case deceleration point determined from the worst case profile pre-loaded into the ROM 24 and the final position S_{F}.

Conditional statement at step 34 is modified with the new S₂ effectively to delay commencement of the deceleration to a point later than worst case deceleration commencement (S_{2W}). As a result, the track seek will continue at maximum velocity past the point of worst case deceleration to a new point determined by the performance ratio. The velocity dictated by the look-up table in the ROM 24 is modified by the amount directed by the performance factor. Thus, the velocity V₂ from the look-up table is multiplied by the performance factor R, V = V_{L}R, where V_{L} is the velocity specified by the look-up table for worst case.

With reference to Figure 5, the initial track position determined at step 54 is transferred to step 32 and the position S_{2W} for commencing the worst case deceleration profile is inserted into step 34 as S₂, as in the prior art. Upon determination of the performance ratio R, as hereinbefore described, a new S₂ is computed, as described, and the value of the new S₂ is inserted into step 34 for S_{2W}. Assuming at this point (acceleration just completed) that S_{N} is smaller than S₂, full velocity of the actuator continues. When S_{N} reaches position S₂ (assuming S_{N} does not equal the destination position S_{F}), the worst case velocity profile is determined at step 44 from the ROM 24, as in prior systems. However, at step 68 the velocity profile is modified by multiplying the look-up velocity V_{L} by the performance ratio R. Thus, the modified velocity profile will bring the head to a stop at the desired destination track position S_{F}. For a short time during deceleration the output velocity might actually exceed maximum velocity. This can be corrected, however, by conditioning the output velocity to be no larger than the pre-determined maximum velocity.

An alternative, which is preferred over the embodiment of the present invention described above, is to provide several look-up tables for computation of S₂ and deceleration velocities for various performance ratios. The process described to the left side of Figure 5 is employed to compute the performance ratio R. A plurality of deceleration velocity profiles are stored in the look-up tables in the ROM 24, each having an assigned performance ratio. The deceleration velocity profile whose assigned performance ratio most closely matches the performance ratio calculated at step 64 is selected, and the deceleration is accomplished as described in connection with Figure 4 with the velocity profile selected. The position S₂ is calculated from the final position S_{F} and the deceleration velocity profile selected.

Figure 6 illustrates the completed velocity profile of velocity versus position using the present invention. During acceleration, the actual velocity increases as shown by the solid graph until it reaches maximum velocity at S_{1A}. However, the best case acceleration profile shown by dashed line 70 reaches maximum velocity at position S_{1B} and at time T_{AB}. The actual profile shows a lesser velocity at position S_{1B} at a longer time T_{AA}, and a worst case profile 72 shows an even smaller velocity at position S_{1B} at an even longer time T_{AW}. The performance ratio R = T_{AW}/T_{AA} is thus determined.

The point of commencement deceleration may be selected, based on the performance ratio R as determined from the acceleration curve and the final position S_{F}. Therefore, as shown in Figure 6, the actual point of commencing deceleration may occur at S_{2A}, which is past the position of worst case deceleration commencement S_{2W}. As a result, deceleration is more optimally fitted to the conditions existing with the disk drive apparatus, and track setting without over-shoot is more rapidly accomplished.

## Claims

1. A head servo control apparatus comprising:
means for driving a voice coil actuator (16) located in a disk drive apparatus to position a head on a specific track of a disk;
track crossing detection means (22) which in operation outputs a track pulse signal for each track on the disk that is passed by the head;
position determining means (10) to determine the instantaneous actuator position based on said track pulse signals from said track crossing detecting means (22) said head servo control being characterised by:
means for determining a first position (S1B) relative to the start position of the head movement, where, after application of a maximum acceleration, a predetermined maximum velocity is obtained under best case conditions;
means (24) for storing, at manufacturing time, worst case deceleration profiles and worst cases time values (TAW) representing the time elapsed from moving said head from said start position to said first position (S1B) under worst case conditions;
means for measuring the actual time (TAA) elapsed during a movement from said start position to said first position (S1B);
means for calculating a performance factor (R) as a ratio between said actual time value (TAA) and a worst case time value (TAW);
means for computing, based on said performance factor (R) and a worst case deceleration starting position (S2W) obtained from said storage means (24), a second position (S2A) representing the starting point to be used for starting the subsequent deceleration;
means for modifying the deceleration velocity in dependence on a worst case deceleration velocity profile obtained from said storage means (24) and said performance factor (R), when said second position (S2A) is reached in order to stop movement exactly at a final position (SF).

2. Apparatus as claimed in claim 1 characterised in that said modifying means, in operation, alters said pre-set limit.

3. Apparatus as claimed in claim 1 characterised in that said modifying means, in operation, alters said velocity profile when the target distance is smaller than said pre-set limit.

4. Apparatus as claimed in any preceding claim, characterised in that the velocity profile is, in operation, determined by said performance factor.

5. A method of moving a head from a first position adjacent a first track on a disk to a second position (SF) adjacent a second track on the disk, comprising accelerating said head to a predetermined maximum velocity, and characterised by measuring the time (TAA) required to accelerate said head to a predetermined position (S1B), the velocity of said head at said predetermined position (S1B) being less than or equal to said maximum velocity, obtaining, from a storage means (24), preloaded at manufacturing time, the time required to accelerate said head to said predetermined position under "worst case" acceleration conditions, calculating a performance factor (R) based on the ratio of the measured (TAA) and obtained (TAW) times, calculating a third position (S2W) for said head where deceleration of said head is expected to commence to halt movement of said head at said second position (S2W) under "worst case" deceleration conditions, determining a fourth position (S2A) of said head, between said third (S2W) and second (SF) positions, based on the third position (S2W) and said performance factor (R), and commencing deceleration of said head when said head reaches its fourth position (S2A).

6. A method according to claim 5 characterised in that the pre-determined position is selected as the position where the head reaches the maximum velocity under "best case" acceleration conditions.

## Patentansprüche

1. Servokopf-Regelvorrichtung mit:
einer Einrichtung zur Ansteuerung eines Schwingspulenstellgliedes (16), das in einem Plattenlaufwerkgerät angeordnet ist, um einen Kopf auf eine spezielle Spur einer Platte zu positionieren,
einer Spurdurchlauf-Dektoreinrichtung (22), die im Betrieb ein Spurimpulssignal für jede Spur auf der Platte abgibt, die von dem Kopf durchlaufen wird,
einer Positionsbestimmungseinrichtung (10) zur Bestimmung der momentanen Stellgliedposition auf der Grundlage der Spurimpulssignale von der Spurdurchlauf-Detektoreinrichtung (22), wobei die Servokopf-Regelung gekennzeichnet ist durch:
eine Einrichtung zur Bestimmung einer ersten Position (S1B) bezüglich der Anfangsposition der Kopfbewegung, an der nach der Einwirkung einer maximalen Beschleunigung eine vorgegebene maximale Geschwindigkeit unter günstigsten Bedingungen erreicht wird,
eine Einrichtung (24), die zur Fertigungszeit zum Abspeichern von Abbremsprofilen unter ungünstigsten Bedingungen und Zeitwerten (TAW) unter ungünstigsten Bedingungen dient, die die Zeit darstellen, die unter ungünstigsten Bedingungen während der Bewegung des Kopfes von der Anfangsposition auf die erste Position (S1B) verstreicht,
eine Einrichtung zur Messung der tatsächlichen Zeit (TAA), die während einer Bewegung von der Anfangsposition auf die erste Position (S1B) verstreicht,
eine Einrichtung zur Berechnung eines Leistungsfaktors (R) als ein Verhältnis zwischen dem tatsächlichen Zeitwert (TAA) und dem Zeitwert (TAW) für den ungünstigsten Fall,
eine Einrichtung, die auf der Grundlage des Leistungsfaktors (R) und einer aus den Speichereinrichtungen (24) gewonnenen Abbremsanfangsposition (S2W) für den ungünstigsten Fall zur Berechnung einer zweiten Position (S2A) dient, die den Anfangspunkt darstellt, der für den Beginn der nachfolgenden Abbremsung zu verwenden ist,
eine Einrichtung zur Modifikation der Abbremsgeschwindigkeit in Abhängigkeit von einem aus den Speichereinrichtungen (24) gewonnenen Abbremsgeschwindigskeitsprofil für den ungünstigsten Fall und in Abhängigkeit von dem Leistungsfaktor (R), wenn die zweite Position (S2A) erreicht wurde, um die Bewegung exakt an der endgültigen Position (SF) zu stoppen.

2. Vorrichtung nach Anspruch 1, dadurch gekennzeichnet, daß die Modifikationseinrichtung im Betrieb den voreingestellten Grenzwert ändert.

3. Vorrichtung nach Anspruch , dadurch gekennzeichnet, daß die Modifikationseinrichtung im Betrieb das Geschwindigkeitsprofil ändert, wenn die Zielentfernung kleiner als der voreingestellte Grenzwert ist.

4. Vorrichtung nach einem der vorhergehenden Ansprüche, dadurch gekennzeichnet, daß das Geschwindigkeitsprofil im Betrieb durch den Leistungsfaktor bestimmt ist.

5. Verfahren zur Bewegung eines Kopfes von einer ersten Position benachbart zu einer Spur auf einer Platte auf eine zweite Position (SF) benachbart zu einer zweiten Spur auf der Platte, wobei das Verfahren die Beschleunigung des Kopfes auf eine vorgegebene maximale Geschwindigkeit umfaßt und gekennzeichnet ist durch die Messung der Zeit (TAA), die erforderlich ist, um den Kopf auf eine vorgebene Position (S1B) zu beschleunigen, wobei die Geschwindigkeit des Kopfes an der vorgebenen Position (S1B) kleiner oder gleich der maximalen Geschwindigkeit ist, die Gewinnung der Zeit, die zur Beschleunigung des Kopfes auf die vorgegebene Position unter ungünstigsten Beschleunigungsbedingungen erforderlich ist, aus einer Speichereinrichtung, die zur Herstellungszeit geladen wurde, die Berechnung eines Leistungsfaktors R auf der Grundlage des Verhältnisses der gemessenen (TAA) und gewonnenen (TAW) Zeiten, die Berechnung einer dritten Position (S2W) für den Kopf, an der der Beginn der Abbremsung des Kopfes zum Anhalten der Bewegung des Kopfes an der zweiten Position (S2W) unter ungünstigsten Abbremsbedingungen erwartet wird, die Bestimmung einer zwischen den dritten (S2W) und zweiten (SF) Positionen liegenden vierten Position ((S2A) des Kopfes auf der Grundlage der dritten Position (S2W) und des Leistungsfaktors (R), und den Beginn der Abbremsung des Kopfes, wenn der Kopf seine vierte Position (S2A) erreicht.

6. Verfahren nach Anspruch 5, dadurch gekennzeichnet, daß die vorgebene Position als die Position ausgewählt wird, an der der Kopf die maximale Geschwindigkeit unter Beschleunigungsbedingungen für den güngstigsten Fall erreicht.

## Revendications

1. Dispositif de servocommande de tête comprenant :
un moyen pour entraîner un actionneur à bobine mobile (16) situé dans un appareil d'entraînement de disques pour positionner une tête sur une piste spécifique d'un disque;
un moyen de détection de traversée de piste (22) qui, lorsqu'il fonctionne, émet un signal impulsionnel de piste pour chaque piste du disque parcourue par la tête;
un moyen de détermination de position (10) pour déterminer la position instantanée de l'actionneur en fonction desdits signaux impulsionnels de piste issus dudit moyen de détection de traversée de piste (22), ledit dispositif de commande de tête étant caractérisé par ;
un moyen pour déterminer une première position (S1B) par rapport à la position de départ du mouvement de tête où, suite à l'application d'une accélération maximale, une vitesse maximale prédéterminée est obtenue sous les meilleures conditions de cas ;
un moyen (24) pour stocker, lors de la fabrication, des pires cas de profils de décélération et des pires cas de valeurs de temps (TAW) représentant le temps écoulé pendant le déplacement de ladite tête de ladite position de départ jusqu'à ladite première position (S1B) sous les pires conditions de cas ;
un moyen pour mesurer le temps réel (TAA) écoulé pendant un déplacement de ladite position de départ jusqu'à ladite première position (S1B);
un moyen pour calculer un facteur de performance (R) en tant que rapport entre ladite valeur de temps réel (TAA) et un pire cas de valeur de temps (TAW);
un moyen pour calculer, en fonction dudit facteur de performance (R) et d'un pire cas de position de départ de décélération (S2W) obtenu à partir dudit moyen de stockage (24), une deuxième position (S2A) représentant le point de départ à utiliser pour démarrer la décélération ultérieure;
un moyen pour modifier la vitesse de décélération en fonction d'un pire cas de profil de vitesse de décélération, obtenu à partir dudit moyen de stockage (24) et dudit facteur de performance (R) lorsque ladite deuxième position (S2A) est atteinte afin d'arrêter le déplacement de façon exactement à une position finale (SF).

2. Dispositif selon la revendication 1, caractérisé en ce que ledit moyen de modification, en fonctionnement, modifie ladite limite prédéterminée.

3. Dispositif selon la revendication 1, caractérisé en ce que ledit moyen de modification, en fonctionnement, modifie ledit profil de vitesse lorsque la distance visée est inférieure à ladite limite prédéterminée.

4. Dispositif selon l'une quelconque des revendications précédentes, caractérisé en ce que, en fonctionnement, le profil de vitesse est déterminé par ledit facteur de performance.

5. Procédé pour déplacer une tête d'une première position contiguë à une première piste sur un disque jusqu'à une deuxième position (SF) contiguë à une deuxième piste sur le disque, comportant l'accélération de ladite tête jusqu'à une vitesse maximale prédéterminée, et caractérisée par la mesure du temps (TAA) nécessaire pour accélérer ladite tête vers une position prédéterminée (S1B), la vitesse de ladite tête à ladite position prédéterminée (S1B) étant inférieure ou égale à ladite vitesse maximale, l'obtention, à partir d'un moyen de stockage (24) préchargé lors de la fabrication, le temps nécessaire pour accélérer ladite tête vers ladite position prédéterminée sous les "pires cas" de conditions d'accélération, le calcul d'un facteur de performance (R) en fonction du rapport entre les temps mesuré (TAA) et obtenu (TAW), le calcul d'une troisième position (S2W) pour ladite tête où la décélération de ladite tête est supposée commencer afin de commencer à arrêter le déplacement de ladite tête à ladite deuxième position (S2W) sous les "pires cas" de conditions de décélération, la détermination d'une quatrième position (S2A) de ladite tête entre lesdites troisième (S2W) et deuxième (SF) positions en fonction de la troisième position (S2W) et du facteur de performance (R), et le démarrage de la décélération de ladite tête lorsque ladite tête atteint sa quatrième position (S2A).

6. Procédé selon la revendication 5, caractérisée en ce que la position prédéterminée est sélectionnée en tant que position où la tête atteint la vitesse maximale sous les "meilleurs cas" de conditions d'accélération.
